# EUROPEAN PATENT APPLICATION

(11) **EP 3 496 023 A1**
(43) Date of publication of application: **12.06.2019**
(21) Application number: 18208844.3
(22) Date of filing: 28.11.2018
(51) Int. Cl.: G06Q 30/06

(54) **POWERTRAIN OPTIMIZATION MOBILE APPLICATION**

(30) Priority: 28.11.2017 US 201715824818
(71) Applicant: PACCAR INC, Bellevue, WA 98004 (US)
(72) Inventor: HERGART, Carl Anders, Bellingham, Washington 98229 (US); GERTY, Michael, Bellingham, Washington 98229 (US); COPLIN, Sebastian Eorl, EVERETT, Washington 98203 (US)
(74) Representative: Gevers Patents

(57) **Abstract**

A mobile computing device presents a set of user interface (UI) elements and receives user input corresponding to a set of vehicle specification values (e.g., engine type, transmission type, axle ratio) via the set of UI elements. The mobile computing device obtains (e.g., from a remote computer system hosted by a vehicle manufacturer) a vehicle performance value (e.g., a fuel economy value or a greenhouse gas emission value), an optimization value for the vehicle performance value, and vehicle specification analysis information based at least in part on the set of vehicle specification values. The mobile computing device presents the vehicle performance value, the optimization value, and vehicle specification feedback to a user. The vehicle specification feedback is based at least in part on the optimization value and the vehicle specification analysis information.

## Description

### BACKGROUND

Web sites that allow a user to select a desired configuration for a product before purchasing the product have become increasingly popular. Updated information can be provided to a user after particular options have been selected, and users may be given the opportunity to change or confirm the selected options before placing an order.

However, existing tools are not well adapted for more fine-tuned configuration goals. For example, when shopping for a vehicle, a user can select a specific model, color, interior and exterior options, and the like. In some cases, selected options can affect the fuel economy or performance of the vehicle. Users typically must rely on their own knowledge and judgment to select appropriate vehicle options in the hopes that they will be compatible with one another and allow the user to achieve a desired goal, such as a fuel economy or greenhouse gas (GHG) emissions target. What is needed is a system that allows a user to automatically receive feedback on selected powertrain components that will help the user to meet desired fuel economy or greenhouse gas GHG emissions goals.

### SUMMARY

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

In one aspect, a mobile computing device presents a first set of user interface (UI) elements on a display of the mobile computing device and receives user input corresponding to a set of one or more vehicle specification values (e.g., engine type, transmission type, axle ratio) via the first set of UI elements. The mobile computing device obtains a vehicle performance value, an optimization value for the vehicle performance value, and vehicle specification analysis information based at least in part on the set of vehicle specification values. The mobile computing device presents the vehicle performance value, the optimization value, and vehicle specification feedback on the display of the mobile computing device. The vehicle specification feedback is based at least in part on the optimization value and the vehicle specification analysis information. The vehicle performance value is a fuel economy value or a greenhouse gas (GHG) emission value. Obtaining the vehicle performance value, the optimization value, and the vehicle specification analysis information may involve transmitting the set of vehicle specification values to a vehicle specification analysis device and receiving the vehicle performance value, the optimization value, and the vehicle specification analysis information from the vehicle specification analysis device.

In another aspect, a computer system (e.g., one or more server computers hosted by a vehicle manufacturer or retailer) in communication with a mobile computing device receives a set of one or more vehicle specification values from the mobile computing device, determines a vehicle performance value, an optimization value, and vehicle specification analysis information based at least in part on the set of vehicle specification values received from the mobile computing device, and transmits the vehicle performance value, the optimization value, and the vehicle specification analysis information to the mobile computing device. The computer system may generate a vehicle specification based at least in part on the set of vehicle specification values and transmit the vehicle specification to a vehicle manufacturer computer system for further processing (e.g., in the context of manufacturing a vehicle based on the specification).

The mobile computing device may present additional UI elements to obtain additional relevant information. For example, the mobile computing device may present a second set of UI elements and receive user input corresponding to expected vehicle use information via the second set of UI elements. The expected vehicle use information may include one or more of a driver profile (e.g., a shift aggressiveness value and a pedal aggressiveness value), commercial application information, and expected vehicle speed. As another example, the mobile computing device may present a third set of UI elements and receive user input corresponding to route information via the third set of UI elements. The vehicle performance value, the optimization value, or the vehicle specification analysis information may be further based on the expected vehicle use information or the route information.

The mobile computing device may present additional UI elements to provide additional functionality. For example, the mobile computing device may present an automatic selection UI element and obtain an optimized set of one or more vehicle specification values in response to activation of the automatic selection UI element.

### DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:
FIGURE 1 is a block diagram of a system architecture that includes components suitable for implementing aspects of the disclosed subject matter;
FIGURES 2A-2G are screenshot diagrams of an illustrative GUI that can be used to obtain user input corresponding to selection of vehicle specification options and provide feedback in accordance with the present disclosure;
FIGURE 3 is a flow chart of an illustrative process that a mobile computing device can perform to present a vehicle performance value, an optimization value, and vehicle specification feedback in accordance with the present disclosure;
FIGURE 4 is a flow chart of an illustrative process that a computer system can perform to provide a vehicle performance value, an optimization value, and vehicle specification analysis information to a mobile computing device in accordance with the present disclosure; and
FIGURE 5 is a block diagram of an illustrative computing device appropriate for use in accordance with the present disclosure.

### DETAILED DESCRIPTION

Embodiments of the present disclosure are generally directed to systems and methods for configuring and optimizing a vehicle powertrain to meet desired fuel economy or greenhouse gas GHG emissions goals. In described embodiments, an application executing on a mobile device provides a graphical user interface that allows the user to input vehicle powertrain configuration options and quickly receive feedback on the options, as well as opportunities to adjust settings. One possible benefit of this approach is improved user trust and engagement with the process of customizing a vehicle, based on the user's improved ability to directly choose and receive feedback on options. Another possible benefit of this approach is the ability of fleet owners, dealership sales staff, or manufacturers to obtain information on user preferences and recommend adjustments that may have benefits for the fleet owner, dealership sales staff, or manufacturer (e.g., in the form of improved fleet fuel economy or GHG credit balances) as well as the user or vehicle operator (e.g., in the form of reduced fuel costs).

The detailed description set forth below in connection with the appended drawings is an illustrative and non-limiting description of various embodiments of the disclosed subject matter. The following description proceeds with reference to examples of systems and methods suitable for use in vehicles, such as Class 8 trucks. Although illustrative embodiments of the present disclosure will be described hereinafter with reference to trucks, it will be appreciated that aspects of the present disclosure have wide application, and therefore, may be suitable for use with many types of vehicles, such as passenger vehicles, buses, commercial vehicles, light and medium duty vehicles, etc.

In the following description, numerous specific details are set forth in order to provide a thorough understanding of illustrative embodiments of the present disclosure. It will be apparent to one skilled in the art, however, that many embodiments of the present disclosure may be practiced without some or all of the specific details. In some instances, well-known process steps have not been described in detail in order not to unnecessarily obscure various aspects of the present disclosure. Further, it will be appreciated that embodiments of the present disclosure may employ any combination of features described herein. The illustrative examples provided herein are not intended to be exhaustive or to limit the claimed subject matter to the precise forms disclosed.

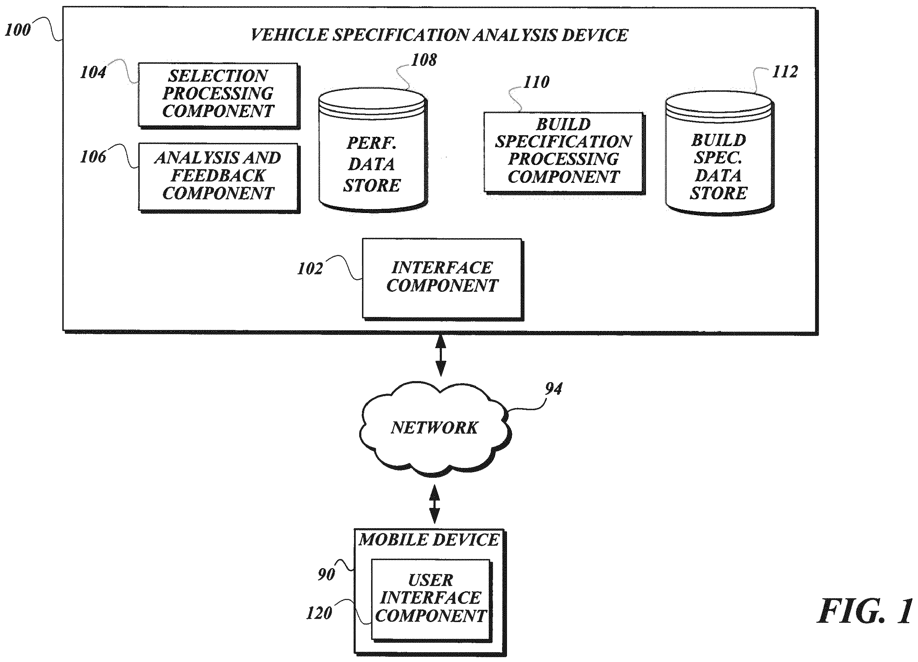

FIGURE 1 is a block diagram of a system architecture that includes components suitable for implementing aspects of the disclosed subject matter. In the example depicted in FIGURE 1, a user (not shown) interacts with a mobile device 90 to connect to and communicate with a vehicle specification analysis device 100 over a network 94, such as the Internet. The mobile device 90 may be any type of mobile computing device capable of connecting to the vehicle specification analysis device 100 and presenting a user interface to the user (e.g., by executing a user interface component 120). In at least one embodiment, the mobile device 90 (e.g., smartphone, tablet computer, notebook computer) includes one or more processors, memory, computer-readable storage media, a display (e.g., a touchscreen display), and a network interface. The mobile device 90 may connect to the vehicle specification analysis device 100 via a standard web browser or through a dedicated application. Other examples of computing devices that may be used in place of the mobile device 90 include a desktop computer or a point-of-sale system.

Although a single mobile device is shown in FIGURE 1 for ease of illustration, the system can be easily adapted to accommodate multiple mobile devices and other computing devices in order to provide access to the system for multiple users in a variety of ways. Further, the system can be easily adapted to include multiple vehicle specification analysis devices in order to scale the system to effectively accommodate large numbers of users.

The vehicle specification analysis device 100 may be any type of computing device configurable to execute components described below and to communicate with the mobile device 90. In one embodiment, the vehicle specification analysis device 100 is a server computer having one or more processors, memory, computer-readable storage media, and a network interface. The components of the vehicle specification analysis device 100 may be executed on more than one computing device. Alternatively, some functionality described as being performed by the vehicle specification analysis device 100 may instead be performed by a mobile device 90, or vice versa.

The vehicle specification analysis device 100 includes components such as an interface component 102, a selection processing component 104, and an analysis and feedback component 106. The interface component 102 is configured to communicate with other components of the vehicle specification analysis device 100 and the mobile device 90. The interface component 102 also may provide additional functionality, such as providing an interface to be rendered by the mobile device 90 to allow users to receive feedback on a vehicle specification. In this way, the interface component 102 may provide user interface functionality in place of, or in combination with the user interface component 120.

The selection processing component 104 is configured to provide vehicle specification options from which users can choose, and to process selections made by users. The analysis and feedback component 106 is configured to analyze (e.g., perform calculations on) the selections received by the selection processing component 104 and provide related feedback such as indicators of whether, or to what extent, fuel economy performance or GHG emissions are optimized or how they may be improved. The analysis may take different forms. In one possible scenario, the analysis and feedback component 106 runs, or causes another component or device to run a simulation of the configured truck that provides an estimation of parameters, such as fuel economy or GHG emissions, for the configuration. In another possible scenario, the analysis and feedback component 106 obtains pre-calculated values by querying a database based on the selections.

The vehicle specification analysis device 100 also includes a performance data store 108. The performance data store 108 includes detailed information on effects or characteristics of vehicle options (e.g., powertrain options) that are available for selection. For example, the performance data store 108 may include look-up tables with fuel economy performance characteristics (e.g., performance or GHG emissions performance) of various combinations of customer-selected options, or performance characteristics of individual components, from which the overall performance of combinations of those components can be calculated.

Optionally, the vehicle specification analysis device 100 may include an order processing component 110 and related build specification data store 112 to convert such selections into a build specification for a vehicle. The build specification may be stored in a computer-readable file format and transmitted to a vehicle manufacturer computer system (not shown) for use in a manufacturing process. In this way, the system may be configured to customize the manufacture of particular vehicles, and improve their performance, in accordance with techniques described herein.

The user interface component 120 is configured to cause a user interface, such as a graphical user interface (GUI), to be presented on the mobile device 90. The user interface may be presented in any number of ways, such as via a web browser, a dedicated application, or the like. Vehicle specification information can be repeatedly selected, reviewed, and modified (e.g., by a user), as described in detail below.

The components described above may be implemented as software or hardware components of a computing device, such as the vehicle specification analysis device 100 or the mobile device 90. Functionality described herein as being performed by a particular component may be performed by a single component or split between multiple components.

The data stores described above may include a database that stores the described data in a structured format. Alternatively, the data stores may reside on a computing device separate from the vehicle specification analysis device 100. One of ordinary skill in the art will recognize that the data described as being stored in these data stores may be stored by any suitable device.

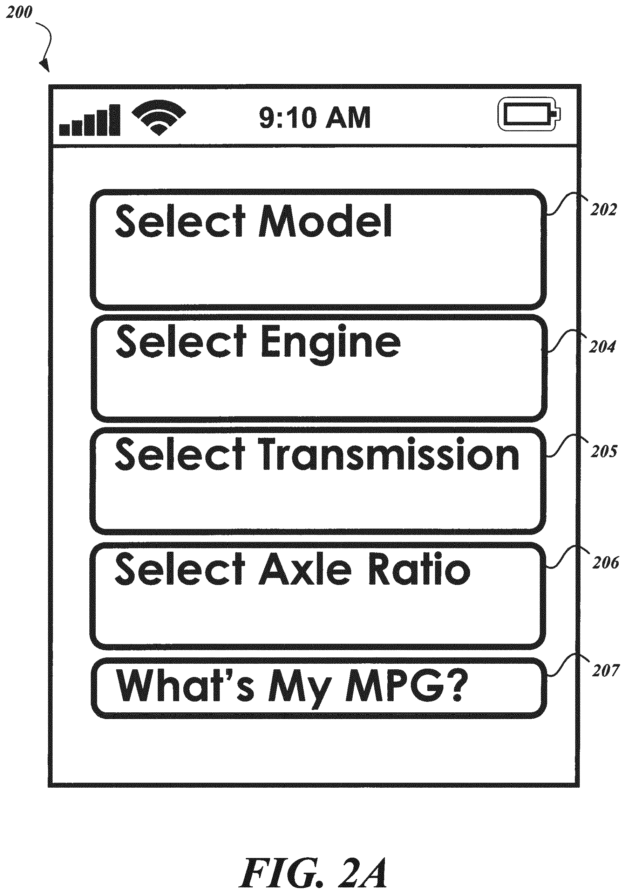

FIGURES 2A-2G are screenshot diagrams of an illustrative GUI that can be used to obtain user input corresponding to selection of vehicle specification options, analyze the specification options, and provide feedback in accordance with embodiments of the disclosed subject matter. In the example shown in FIGURE 2A, a home screen 200 includes software buttons 202 ("Select Model"), 204 ("Select Engine"), 205 ("Select Transmission"), 206 ("Select Axle Ratio"), and 207 ("What's My MPG?"). These software buttons are illustrative of a system that allows the user to select vehicle specification options (e.g., engine, transmission, axle ratio) and request the system to perform calculations (e.g., an estimated fuel economy) and provide feedback based on the specification. The user can interact with the buttons by tapping a touchscreen at an appropriate location, or the user can invoke corresponding functionality in the user interface in some other way (e.g., voice control). These buttons and features are shown for purposes of illustration only, and the functionality of the described system is not limited to these examples. Additional examples are described below.

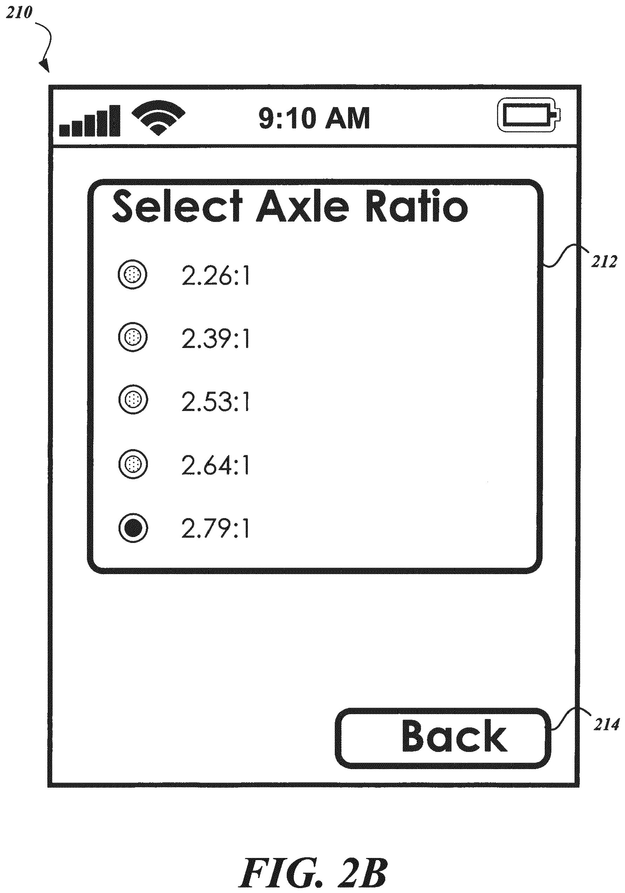

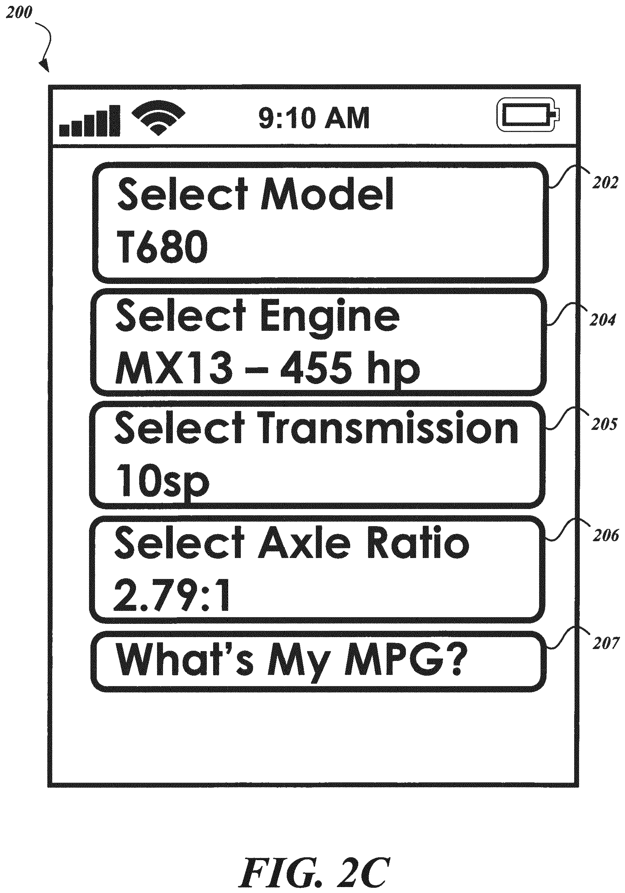

The user can interact with the Select Model button 202 to select a truck model. The user can interact with the Select Engine button 204, the Select Transmission button 205, and the Select Axle Ratio button 206 to select options for engine type, transmission type, and axle ratio, respectively. If one of these buttons is activated, the user can be directed to a new screen for selecting a model number, engine type, transmission type, or axle ratio, respectively, or make a selection directly from the home screen 200 (e.g., via a drop-down menu). In the example shown in FIGURE 2B, a powertrain option selection screen 210 depicts a selection element 212 in the form of radio buttons for available axle ratios. As shown, an axle ratio of 2.79:1 is selected. (A similar approach can be used for selecting from available engine options, transmission options, or other options.) A truck model, engine type, or transmission type can be selected in a manner similar to the approach shown in FIGURE 2B (e.g., in the form of radio buttons for available options) or in some other way. As options are selected in the respective categories, the home screen 200 can be updated to show selections. In the example shown in FIGURE 2C, illustrative model number, engine type, transmission type, and axle ratio selections are shown.

Available vehicle specification options (e.g., engine type, transmission type, axle ratio) may be dependent on previous selections. The available selections can be updated as other selections are made. For example, if a selected model number has two engine options, those options may be provided to the user for selection. As another example, if a selected model number has only one transmission option, that option may be automatically selected without further input by the user.

The system can perform calculations based on the selected options. For example, the user can activate a submit button 207 (labeled "What's My MPG?" in this example) to cause the system to perform a fuel economy calculation, a GHG emissions calculation, or a calculation of some other parameter or combination of parameters. In one possible scenario, the user is directed to a new screen in which results of the calculation may be provided in the form of a performance value, potentially along with other information such as feedback on how to improve performance with respect to the particular parameter being calculated.

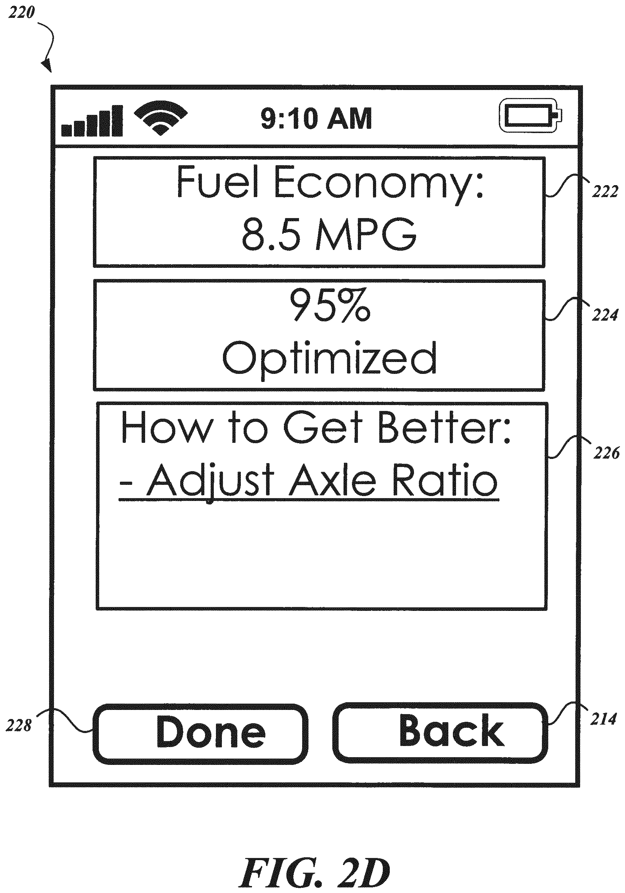

FIGURE 2D is a screenshot diagram of an illustrative feedback screen 220. The feedback screen 220 includes a performance value area 222, an optimization value area 224, and a feedback area 226, which may be presented to the user after the submit button 207 is activated. In the example shown in FIGURE 2D, the performance value area 222 displays a calculated fuel economy value (e.g., 8.5 mpg) and the optimization value area 224 includes an optimization value in the form of a percentage that indicates the specification is not fully optimized. A numeric fuel economy value may be presented as an estimate based on assumptions about driving conditions and other variables, rather than a guaranteed figure for a particular vehicle specification. Or, a numeric fuel economy value may be omitted in favor of relative fuel economy values (e.g., fair, good, excellent; "star" ratings, etc.). The optimization value also need not be numeric, as in this example. For example, a suboptimal specification can be indicated with a distinctive color (e.g., red or yellow), an icon, or in some other way. Similarly, optimal specifications can be indicated with a numeric value (e.g., 100%) or in some other way, such as distinctive colors (e.g., green), icons, text, etc.

The feedback area 226 provides feedback on the selected options. In this example, the feedback area 226 includes a message indicating that improvement is possible. The feedback area 226 also may include one or more UI elements that may be activated for additional functionality. In this example, the feedback area 226 includes a link (indicated with underlining) labeled "Adjust Axle Ratio." The link indicates that a change in axle ratio may improve fuel economy and also provides a mechanism (e.g., tapping the link) to make the change. The user has several options for proceeding from the state shown in FIGURE 2D, including activating the link in the feedback area 226, activating the "Done" button 228 to exit the program, or activating the "Back" button 214 to return to the home screen 200 in FIGURE 2C.

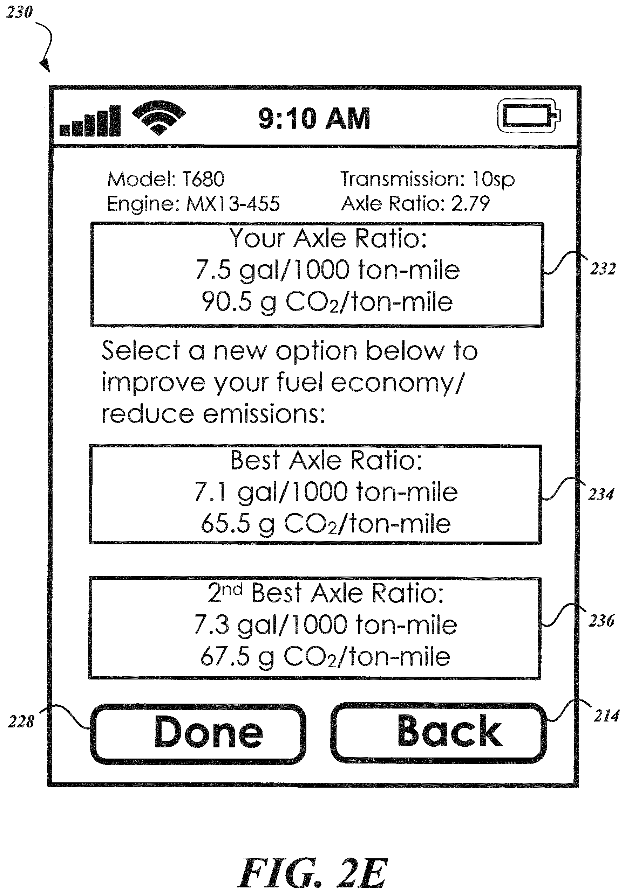

FIGURE 2E is a screenshot diagram of an illustrative supplemental feedback and adjustment screen 230, which may be presented to the user after activating the link in the feedback area of FIGURE 2D. In the example shown in FIGURE 2E, the current selection area 232 provides details on the current selection (e.g., "Your Axle Ratio") as well as the effect of that selection on the performance value (e.g., fuel economy or GHG emissions). The alternative selection areas 234, 236 provide details on other available selections in this category. These areas also may be presented as buttons that can be activated by the user to change the corresponding selection (e.g., to the "best" or "2nd best" axle ratio selection). Regardless of whether the user selects a new option, the user can activate the "Done" button 228 to exit the program or the "Back" button 214 to return to a previous screen such as the feedback screen 220 in FIGURE 2D. Changes made via the supplemental feedback and adjustment screen 230 can be reflected in an updated home screen 200, similar to the version shown in FIGURE 2C.

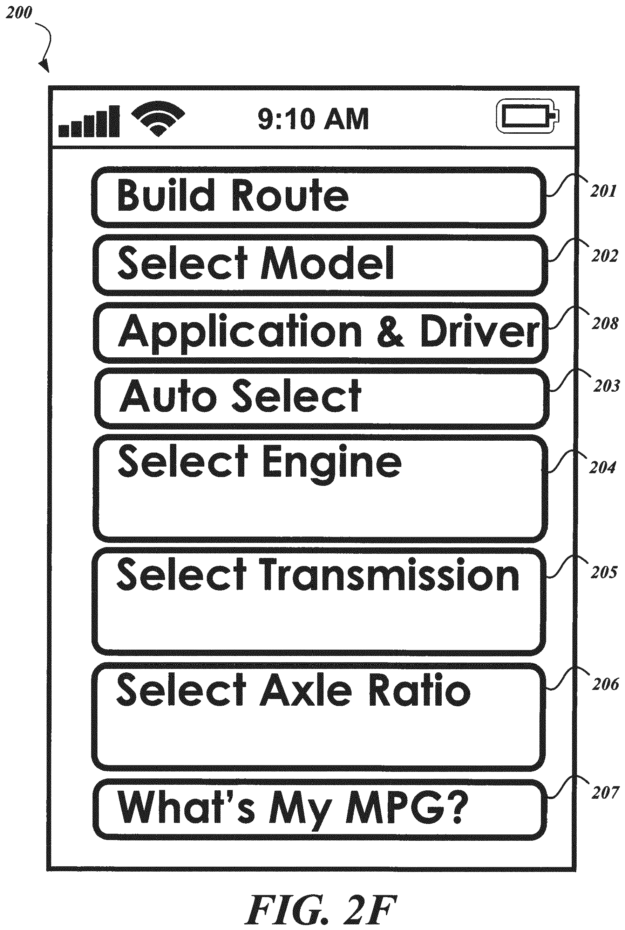

In the example shown in FIGURE 2F, an alternative version of the home screen 200 includes additional software buttons 201 ("Build Route"), 203 ("Auto Select"), and 208 ("Application & Driver") in addition to the software buttons described above with reference to FIGURE 2A. These software buttons are illustrative of a system that allows the user to request automatic selection of some vehicle specification options (e.g., engine, transmission, axle ratio) and provide additional information on expected use of the vehicle, such as route information, commercial application information, and driver profile or driving style.

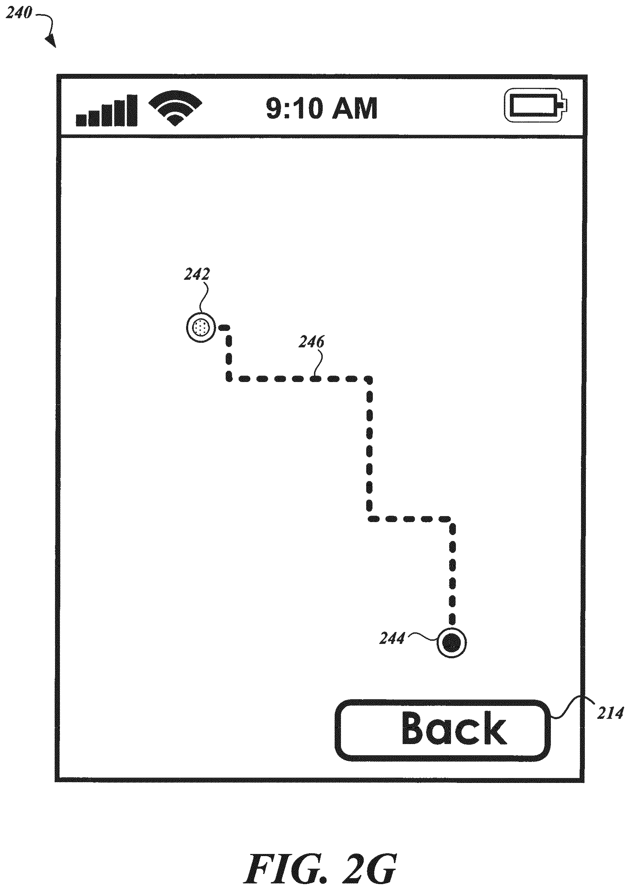

The user can interact with the Build Route button 201 to access mapping functionality for user-defined route or map information or pre-programmed routes and maps. When a desired map is found and selected, the map can be displayed along with a route to be navigated. Or, the user can be given the opportunity to define her own route. The example route screen 240 shown in FIGURE 2G depicts a simplified route map with a start point 242, an end point 244, and dashed line 246 representing a route to be navigated. In some scenarios, the start point 242 and end point 244 may be defined by a user (e.g., by tapping a corresponding location on the map or dragging an end point icon or start point icon to a desired location). In some scenarios, the mobile device may provide route information to the analysis and feedback component 106 of the vehicle specification analysis device 100, which may use the route information to calculate an expected fuel economy or GHG emission performance for a particular vehicle specification along the route. For example, a route with steep grades may cause the analysis and feedback component 106 to return lower fuel economy ratings than a flatter route.

The user can interact with the Application & Driver button 208 to provide information on commercial application (e.g., line haul, vocational, pickup/delivery), driver profile (e.g., shift and pedal aggressiveness), or expected vehicle speed (e.g., a top speed for highway driving in a line haul application). These options can be selected in a manner similar to the approach shown in FIGURE 2B, in the form of radio buttons for available options, or in some other way. As options are selected in the respective categories, the home screen 200 can be updated to show selections.

The user can interact with the Auto Select button 203 to request that options for engine type, transmission type, and axle ratio (or some other combination of options), be selected automatically. If automatic selection is activated, in one possible scenario the options are selected based on predetermined criteria such as fuel economy, GHG emissions, some other parameter, or a combination of parameters. In another possible scenario, the user may be given the option to choose criteria for automatic selection. For example, the user may be directed to a new screen (not shown) in which the user may select the criteria for auto-selection (e.g., optimize fuel economy, GHG emissions, some other parameter, or a combination of parameters), or the user may make a selection directly from the home screen 200 (e.g., via a drop-down menu).

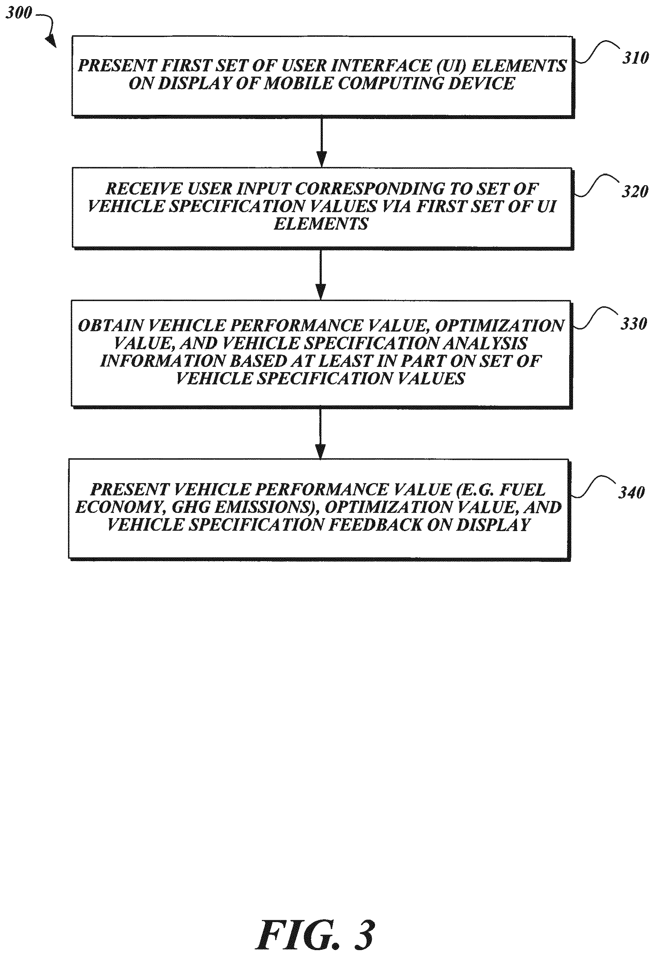

FIGURE 3 is a flow chart that depicts an illustrative process 300 that a computing device (e.g., a mobile computing device such as smartphone) can perform to present a vehicle performance value, an optimization value, and vehicle specification feedback in accordance with the present disclosure. At step 310, the mobile computing device presents a first set of user interface (UI) elements on a display of the mobile computing device. At step 320, the mobile computing device receives user input corresponding to a set of vehicle specification values via the first set of UI elements. For example, the mobile computing device may receive user input corresponding to an engine type, a transmission type, an axle ratio, or some combination of such values in response to user interaction with one or more UI elements such as the selection element 212 of FIGURE 2B. The mobile computing device also may receive user input corresponding to expected vehicle use or route information via other UI elements.

At step 330, the mobile computing device obtains a vehicle performance value, an optimization value for the vehicle performance value, and vehicle specification analysis information based at least in part on the set of vehicle specification values. For example, the mobile computing device may transmit the vehicle specification values of step 320 to a remote computer system (e.g., the vehicle specification analysis device 100 of FIGURE 1) for further processing (e.g., by the selection processing component 104 and the analysis and feedback component 106 of FIGURE 1). The mobile computing device may then receive a response from the remote computer system comprising a vehicle performance value (e.g., a fuel economy performance value), an optimization value (e.g., an optimization percentage or some other indication of whether the vehicle performance value is fully optimized), and vehicle specification analysis information (e.g., effects of vehicle specification values selected by the user). For example, in the context of axle ratios, vehicle specification analysis information may include information depicted in elements 232, 234, 236 in FIGURE 2E. Such information is not limited to the examples described herein, which are provided for illustrative purposes only.

At step 340, the mobile computing device presents the vehicle performance value, the optimization value, and vehicle specification feedback on the display of the mobile computing device. For example, the mobile computing device may display a fuel economy performance value (e.g., in element 222 of FIGURE 2D) along with an indication of whether fuel economy is optimized. The indication of whether fuel economy is optimized may include a distinctive visual characteristic associated with the fuel economy value (e.g., green color indicating optimal selections, or red color indicating suboptimal selections). Or, the indication may be provided in a separate UI element (e.g., element 224 of FIGURE 2D). The vehicle specification feedback is based at least in part on the optimization value and the vehicle specification analysis information. For example, the vehicle specification feedback may include specific recommendations based on the vehicle specification analysis information as well as a mechanism for making adjustments, if the optimization value indicates that a selected option is suboptimal. The vehicle specification feedback may be provided in a separate UI element (e.g., element 226 of FIGURE 2D).

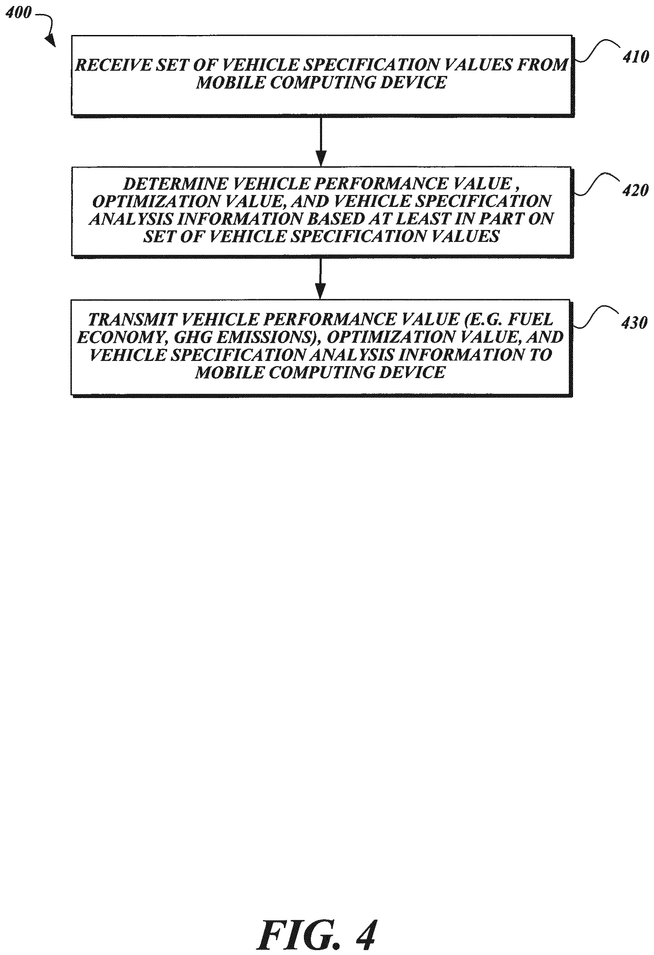

FIGURE 4 is a flow chart that depicts an illustrative technique 400 that a computer system can perform to provide a vehicle performance value, an optimization value, and vehicle specification analysis information to a mobile computing device in accordance with the present disclosure. For example, a computer system comprising one or more server computers hosted by a vehicle manufacturer or retailer in communication with a mobile computing device (e.g., the mobile computing device described above with reference to FIGURE 3) may perform the process of FIGURE 4. At step 410, the computer system receives a set of one or more vehicle specification values from the mobile computing device. At step 420, the computer system determines a vehicle performance value, an optimization value, and vehicle specification analysis information based at least in part on the set of vehicle specification values received from the mobile computing device. At step 430, the computer system transmits the vehicle performance value, the optimization value, and the vehicle specification analysis information to the mobile computing device.

### Illustrative Devices and Operating Environments

Unless otherwise specified in the context of specific examples, described techniques and tools may be implemented by any suitable computing device or set of devices.

In any of the described examples, a data store may be used to store and manage data. A data store contains data as described herein and may be hosted, for example, by a database management system (DBMS) to allow a high level of data throughput between the data store and other components of a described system. The DBMS may also allow the data store to be reliably backed up and to maintain a high level of availability. For example, a data store may be accessed by other system components via a network, such as a private network in the vicinity of the system, a secured transmission channel over the public Internet, a combination of private and public networks, and the like. Instead of or in addition to a DBMS, a data store may include structured data stored as files in a traditional file system. Data stores may reside on computing devices that are part of or separate from components of systems described herein. Separate data stores may be combined into a single data store, or a single data store may be split into two or more separate data stores.

Some of the functionality described herein may be implemented in the context of a client-server relationship. In this context, server devices may include suitable computing devices configured to provide information or services described herein. Server devices may include any suitable computing devices, such as dedicated server devices. Server functionality provided by server devices may, in some cases, be provided by software (e.g., virtualized computing instances or application objects) executing on a computing device that is not a dedicated server device. The term "client" can be used to refer to a computing device that obtains information or accesses services provided by a server over a communication link. However, the designation of a particular device as a client device does not necessarily require the presence of a server. At various times, a single device may act as a server, a client, or both a server and a client, depending on context and configuration. Actual physical locations of clients and servers are not necessarily important, but the locations can be described as "local" for a client and "remote" for a server to illustrate a common usage scenario in which a client is receiving information provided by a server at a remote location.

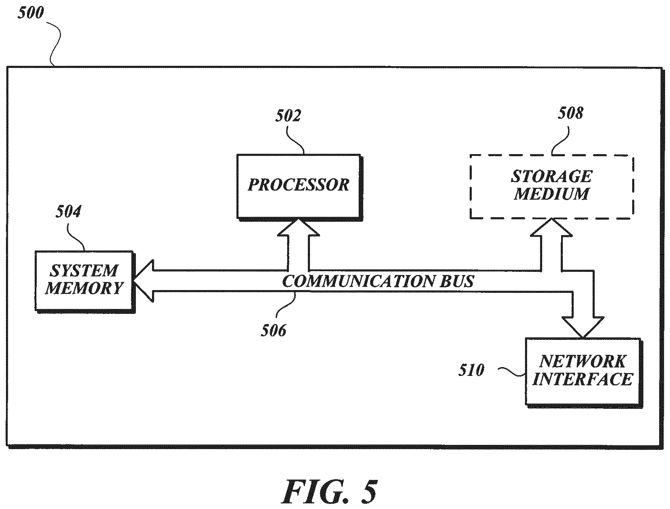

FIGURE 5 is a block diagram of an illustrative computing device 500 appropriate for use in accordance with embodiments of the present disclosure. The description below is applicable to servers, personal computers, mobile phones, smart phones, tablet computers, embedded computing devices, and other currently available or yet-to-be-developed devices that may be used in accordance with embodiments of the present disclosure.

In its most basic configuration, the computing device 500 includes at least one processor 502 and a system memory 504 connected by a communication bus 506. Depending on the exact configuration and type of device, the system memory 504 may be volatile or nonvolatile memory, such as read-only memory ("ROM"), random access memory ("RAM"), EEPROM, flash memory, or other memory technology. Those of ordinary skill in the art and others will recognize that system memory 504 typically stores data or program modules that are immediately accessible to or currently being operated on by the processor 502. In this regard, the processor 502 may serve as a computational center of the computing device 500 by supporting the execution of instructions.

As further illustrated in FIGURE 5, the computing device 500 may include a network interface 510 comprising one or more components for communicating with other devices over a network. Embodiments of the present disclosure may access basic services that utilize the network interface 510 to perform communications using common network protocols. The network interface 510 may also include a wireless network interface configured to communicate via one or more wireless communication protocols, such as WiFi, 2G, 3G, 4G, LTE, WiMAX, Bluetooth, or the like.

In the illustrative embodiment depicted in FIGURE 5, the computing device 500 also includes a storage medium 508. However, services may be accessed using a computing device that does not include means for persisting data to a local storage medium. Therefore, the storage medium 508 depicted in FIGURE 5 is optional. In any event, the storage medium 508 may be volatile or nonvolatile, removable or nonremovable, implemented using any technology capable of storing information such as, but not limited to, a hard drive, solid state drive, CD-ROM, DVD, or other disk storage, magnetic tape, magnetic disk storage, or the like.

As used herein, the term "computer-readable medium" includes volatile and nonvolatile and removable and nonremovable media implemented in any method or technology capable of storing information, such as computer-readable instructions, data structures, program modules, or other data. In this regard, the system memory 504 and storage medium 508 depicted in FIGURE 5 are examples of computer-readable media.

For ease of illustration and because it is not important for an understanding of the claimed subject matter, FIGURE 5 does not show some of the typical components of many computing devices. In this regard, the computing device 500 may include input devices, such as a keyboard, keypad, mouse, trackball, microphone, video camera, touchpad, touchscreen, electronic pen, stylus, or the like. Such input devices may be coupled to the computing device 500 by wired or wireless connections including RF, infrared, serial, parallel, Bluetooth, USB, or other suitable connection protocols using wireless or physical connections.

In any of the described examples, data can be captured by input devices and transmitted or stored for future processing. The processing may include encoding data streams, which can be subsequently decoded for presentation by output devices. Media data can be captured by multimedia input devices and stored by saving media data streams as files on a computer-readable storage medium (e.g., in memory or persistent storage on a client device, server, administrator device, or some other device). Input devices can be separate from and communicatively coupled to computing device 500 (e.g., a client device), or can be integral components of the computing device 500. In some embodiments, multiple input devices may be combined into a single, multifunction input device (e.g., a video camera with an integrated microphone). The computing device 500 may also include output devices such as a display, speakers, printer, etc. The output devices may include video output devices such as a display or touchscreen. The output devices also may include audio output devices such as external speakers or earphones. The output devices can be separate from and communicatively coupled to the computing device 500, or can be integral components of the computing device 500. Input functionality and output functionality may be integrated into the same input/output device (e.g., a touchscreen). Any suitable input device, output device, or combined input/output device either currently known or developed in the future may be used with described systems.

In general, functionality of computing devices described herein may be implemented in computing logic embodied in hardware or software instructions, which can be written in a programming language, such as C, C++, COBOL, JAVA™, PHP, Perl, HTML, CSS, JavaScript, VBScript, ASPX, Microsoft .NET™ languages such as C#, or the like. Computing logic may be compiled into executable programs or written in interpreted programming languages. Generally, functionality described herein can be implemented as logic modules that can be duplicated to provide greater processing capability, merged with other modules, or divided into sub-modules. The computing logic can be stored in any type of computer-readable medium (e.g., a non-transitory medium such as a memory or storage medium) or computer storage device and be stored on and executed by one or more general-purpose or special-purpose processors, thus creating a special-purpose computing device configured to provide functionality described herein.

### Extensions and Alternatives

Many alternatives to the user interfaces described herein are possible. In practice, the user interfaces described herein may be implemented as separate user interfaces or as different states of the same user interface, and the different states can be presented in response to different events, e.g., user input events. The user interfaces can be customized for different devices, input and output capabilities, and the like. For example, the user interfaces can be presented in different ways depending on display size, display orientation, whether the device is a mobile device, etc. The information and user interface elements shown in the user interfaces can be modified, supplemented, or replaced with other elements in various possible implementations. For example, with references to the illustrative user interface features depicted in FIGURES 2A-2G, various combinations of graphical user interface elements including text boxes, sliders, drop-down menus, radio buttons, soft buttons, etc., or any other user interface elements, including hardware elements such as buttons, switches, scroll wheels, microphones, cameras, etc., may be used to accept user input in various forms. As another example, the user interface elements that are used in a particular implementation or configuration may depend on whether a device has particular input or output capabilities (e.g., a touchscreen). Information and user interface elements can be presented in different spatial, logical, and temporal arrangements in various possible implementations. For example, information or user interface elements depicted as being presented simultaneously on a single page or tab may instead be presented at different times, on different pages or tabs, etc. As another example, some information or user interface elements may be presented conditionally depending on previous input, user preferences, or the like.

Many alternatives to the systems and devices described herein are possible. For example, individual modules or subsystems can be separated into additional modules or subsystems or combined into fewer modules or subsystems. As another example, modules or subsystems can be omitted or supplemented with other modules or subsystems. As another example, functions that are indicated as being performed by a particular device, module, or subsystem may instead be performed by one or more other devices, modules, or subsystems. Although some examples in the present disclosure include descriptions of devices comprising specific hardware components in specific arrangements, techniques and tools described herein can be modified to accommodate different hardware components, combinations, or arrangements. Further, although some examples in the present disclosure include descriptions of specific usage scenarios, techniques and tools described herein can be modified to accommodate different usage scenarios. Functionality that is described as being implemented in software can instead be implemented in hardware, or vice versa.

Many alternatives to the techniques described herein are possible. For example, processing stages in the various techniques can be separated into additional stages or combined into fewer stages. As another example, processing stages in the various techniques can be omitted or supplemented with other techniques or processing stages. As another example, processing stages that are described as occurring in a particular order can instead occur in a different order. As another example, processing stages that are described as being performed in a series of steps may instead be handled in a parallel fashion, with multiple modules or software processes concurrently handling one or more of the illustrated processing stages. As another example, processing stages that are indicated as being performed by a particular device or module may instead be performed by one or more other devices or modules.

The principles, representative embodiments, and modes of operation of the present disclosure have been described in the foregoing description. However, aspects of the present disclosure which are intended to be protected are not to be construed as limited to the particular embodiments disclosed. Further, the embodiments described herein are to be regarded as illustrative rather than restrictive. It will be appreciated that variations and changes may be made by others, and equivalents employed, without departing from the spirit of the present disclosure. Accordingly, it is expressly intended that all such variations, changes, and equivalents fall within the spirit and scope of the claimed subject matter.

## Claims

1. A non-transitory computer-readable medium having computer-executable instructions stored thereon that, in response to execution by one or more processors, cause a mobile computing device to perform actions comprising:
presenting a first set of one or more user interface elements on a display of the mobile computing device;
receiving user input corresponding to a set of one or more vehicle specification values via the first set of user interface elements;
obtaining a vehicle performance value, an optimization value for the vehicle performance value, and vehicle specification analysis information based at least in part on the set of vehicle specification values; and
presenting the vehicle performance value, the optimization value, and vehicle specification feedback on the display of the mobile computing device,
wherein the vehicle specification feedback is based at least in part on the optimization value and the vehicle specification analysis information, and wherein the vehicle performance value is a fuel economy value or a greenhouse gas (GHG) emission value.

2. The non-transitory computer-readable medium of Claim 1, wherein the set of one or more vehicle specification values includes one or more of an engine type, a transmission type, and an axle ratio.

3. The non-transitory computer-readable medium of Claim 1, wherein the actions further comprise:
presenting a second set of one or more user interface elements on the display of the mobile computing device; and
receiving user input corresponding to expected vehicle use information via the second set of user interface elements.

4. The non-transitory computer-readable medium of Claim 3, wherein at least one of the vehicle performance value, the optimization value, or the vehicle specification analysis information is further based on the expected vehicle use information.

5. The non-transitory computer-readable medium of Claim 3, wherein the expected vehicle use information comprises one or more of a driver profile, commercial application information, and expected vehicle speed.

6. The non-transitory computer-readable medium of Claim 5, wherein the driver profile includes at least one of a shift aggressiveness value and a pedal aggressiveness value.

7. The non-transitory computer-readable medium of Claim 1, wherein the actions further comprise:
presenting a third set of one or more user interface elements on the display of the mobile computing device; and
receiving user input corresponding to route information via the third set of user interface elements.

8. The non-transitory computer-readable medium of Claim 7, wherein at least one of the vehicle performance value, the optimization value, or the vehicle specification analysis information is further based on the route information.

9. The non-transitory computer-readable medium of Claim 1, wherein obtaining the vehicle performance value, the optimization value, and the vehicle specification analysis information comprises:
transmitting the set of vehicle specification values to a vehicle specification analysis device; and
receiving the vehicle performance value, the optimization value, and the vehicle specification analysis information from the vehicle specification analysis device.

10. The non-transitory computer-readable medium of Claim 1, wherein the actions further comprise:
presenting an automatic selection user interface element on the display of the mobile computing device; and
obtaining an optimized set of one or more vehicle specification values in response to activation of the automatic selection user interface element.

11. A non-transitory computer-readable medium having computer-executable instructions stored thereon that, in response to execution by one or more processors, cause one or more computing devices to perform actions comprising:
receiving a set of one or more vehicle specification values from a mobile computing device;
determining a vehicle performance value, an optimization value for the vehicle performance value, and vehicle specification analysis information based at least in part on the set of vehicle specification values; and
transmitting the vehicle performance value, the optimization value, and the vehicle specification analysis information to the mobile computing device,
wherein the vehicle performance value is a fuel economy value or a greenhouse gas (GHG) emission value.

12. The non-transitory computer-readable medium of Claim 11, wherein the set of one or more vehicle specification values includes one or more of an engine type, a transmission type, and an axle ratio.

13. The non-transitory computer-readable medium of Claim 11, wherein the actions further comprise:
receiving expected vehicle use information from the mobile computing device.

14. The non-transitory computer-readable medium of Claim 13, wherein at least one of the vehicle performance value, the optimization value, and the vehicle specification analysis information is further based on the expected vehicle use information.

15. The non-transitory computer-readable medium of Claim 13, wherein the expected vehicle use information comprises one or more of a driver profile, commercial application information, and expected vehicle speed.

16. The non-transitory computer-readable medium of Claim 15, wherein the driver profile includes at least one of a shift aggressiveness value and a pedal aggressiveness value.

17. The non-transitory computer-readable medium of Claim 11, wherein the actions further comprise:
receiving route information from the mobile computing device.

18. The non-transitory computer-readable medium of Claim 17, wherein at least one of the vehicle performance value, the optimization value, and the vehicle specification analysis information is further based on the route information.

19. The non-transitory computer-readable medium of Claim 11, wherein the actions further comprise:
transmitting an optimized set of one or more vehicle specification values in response to activation of an automatic selection user interface element at the mobile computing device.

20. The non-transitory computer-readable medium of Claim 11, wherein the actions further comprise:
generating a vehicle specification based at least in part on the set of vehicle specification values; and
transmitting the vehicle specification to a vehicle manufacturer computer system.
